# EUROPÄISCHE PATENTANMELDUNG

(11) **EP 0 621 702 A2**
(43) Veröffentlichungstag der Anmeldung: **26.10.1994**
(21) Anmeldenummer: 94105721.8
(22) Anmeldetag: 13.04.1994
(51) Int. Cl.: H04L 1/24, G01R 31/02, G01R 31/28, G08B 29/06, H04L 25/08

(54) **Überwachungsschaltung für den Funktionszustand der Signalleitungen einer Differenzsignal-Übertragungsstrecke**

(30) Priorität: 22.04.1993 DE 4313230
(71) Anmelder: SIEMENS AKTIENGESELLSCHAFT, D-80333 München (DE)
(72) Erfinder: Götzendörfer, Bernd, Dipl.-Ing., D-90453 Schonungen (DE); Ochs, Werner, Dipl.-Ing. (FH), D-90461 Nürnberg (DE); Schneeberger, Reinhold, Dipl.-Ing., D-90556 Seukendorf (DE); Streichert, Gerhard, Dipl.-Ing. (FH), D-92353 Postbauer-Heng (DE)

(57) **Zusammenfassung**

Ein Brückengleichrichter (B) ist an den Signalleitungen (A,Â) der Übertragungsstrecke (US) angeschlossen. Ein erster vom Ausgang des Brückengleichrichters abgeleitete Spannung (Un) an einen Komparator (K). Dessen Ausgangssignal (WS) zeigt den Funktionszustand der Signalleitungen (A,Â) an. Bei Ausbleiben einer definierten Spannung am Ausgang des Brückengleichrichters (B) im gestörten Zustand der Signalleitungenen (A,Â) wird ein zweiter Stromkreis (R4,D2,R3) aktiv. Dieser erzwingt unter Zuhilfenahme der Energieversorgung der Übertragungsstrecke (+Uv,MP) eine Spannung (uf) am Komparator (K) mit einem im Vergleich zur abgeleiteten Spannung (Un) umgekehrten Vorzeichen. Das Ausgangssignal (WS) des Komparators (K) zeigt nun den gestörten Funktionszustand der Signalleitungen (A,Â) an.

## Beschreibung

Die Erfindung betrifft eine Schaltung zur Überwachung des Funktionszustandes der Signalleitungen einer Übertragungsstrecke, auf der Differenzsignale bevorzugt bidirektional übertragen werden können.

Kabelverbindungen sind vorteilhaft, über die Daten in Form von Differenzsignalen übertragen werden. Bei diesen z.B. nach den Normen RS422 bzw. RS485 aufgebauten, bevorzugt zweiadrigen Übertragungsstrecken ist eine Signalauswertung selbst dann noch möglich, wenn die Beträge der positiven bzw. negativen Differenzsignale zwischen den Leitungen klein sind. Aufgrund dieser Eigenschaft können Differenzsignal-Übertragungsstrecken lange Leitungen aufweisen, die im Einzelfall bis zu mehreren hundert Metern lang sind.

Wegen dieser günstigen Gebrauchseigenschaften und der dadurch möglichen u.U. großen Leitungslängen ist es aber notwendig, den Funktionszustand der Signalleitungen einer Differenzsignal-Übertragungsstrecke zu überwachen. So muß erkannt werden, ob es sich beim Auftreten von kleinen Differenzsignalamplituten um zulässige, "echte" Signale handelt. Werden derartige Signale dagegen z.B. aufgrund einer mechanischen Beschädigung der Signalleitungen durch undefinierte, schwebende Potentiale hervorgerufen, so darf diesen kein logischer Bedeutungsinhalt beigemessen werden.

Folglich muß die Auswertung von empfangenen Signalen an den Enden der Übertragungsstrecke zumindest dann abgeschaltet werden, wenn eine der folgenden Fehlerarten auftritt:
a) Kabelbruch einer oder beider Signalleitungen,
b) Kurzschluß zwischen einer oder beiden Signalleitungen und der positiven Versorgungsspannung, bzw.
c) Kurzschluß zwischen einer oder beiden Signalleitungen und der negativen Versorgungsspannung.

Der Erfindung liegt die Aufgabe zugrunde, eine Überwachungsschaltung anzugeben, mit deren Hilfe das Auftreten zumindest der oben genannten Fehlerarten detektiert werden kann, so daß daraufhin die Signaleinspeisung in die bzw. der Signalempfang aus der gestörten Differenzsignal-Übertragungsstrecke zumindest vorübergehend eingestellt wird.

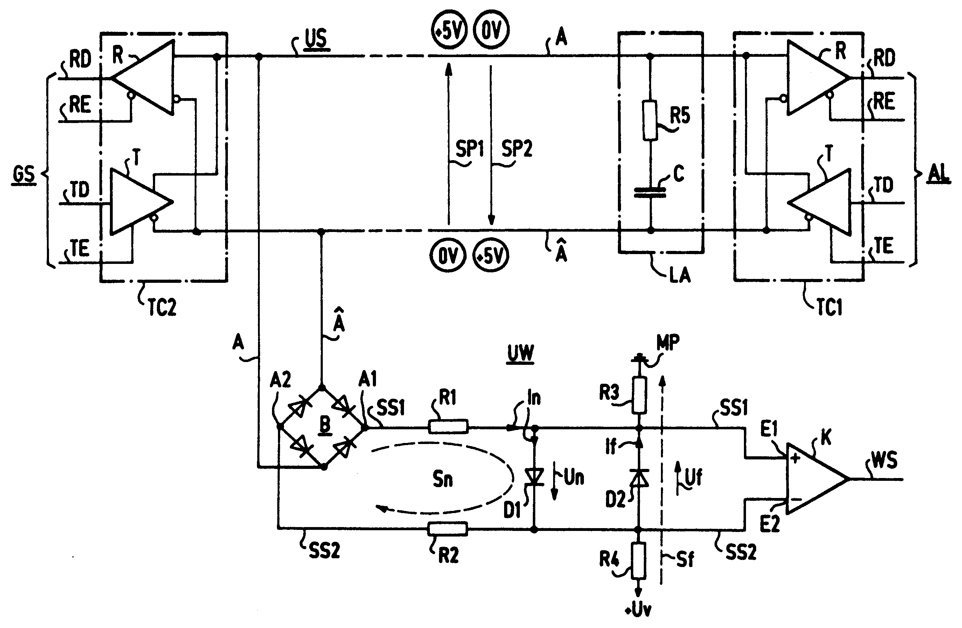

Die Aufgabe wird gelöst mit der Schaltung von Anspruch 1. Vorteilhafte, weitere Ausführungen der Schaltung sind in den Unteransprüchen angegeben. Alle Ausführungsformen der Erfindung werden unter Zuhilfenahme eines in der Figur dargestellten Ausführungsbeispieles näher erläutert.

In der Figur ist im oberen Bereich eine Differenzsignal-Übertragungsstrecke US beispielhaft dargestellt. Die dazugehörige Kabelverbindung ist zweiadrig, und besteht aus einer Signalleitung A und einer komplementären Signalleitung Â. Das Leitungspaar wird an den Enden jeweils von einer umschaltbaren Sende-Empfangseinheit TC1,TC2 abgeschlossen. So dient im dargestellten Beispiel die erste Sende-Empfangungseinheit TC1 zur Anschaltung einer nicht dargestellten Ansteuerlogik AL. Ferner dient die zweite Sende-Empfangseinheit TC2 als Schnittstelle zu einer nicht dargestellten Gegenstelle GS. Ansteuerlogik AL und Gegenstelle GS tauschen somit über die aus den Signalleitungen A,Â und den umschaltbaren Sende- und Empfangseinheiten TC1,TC2 bestehende Differenzsignal-Übertragungsstrecke US Daten in Form von Differenzsignalen SP1,SP2 aus.

In der Figur sind die beiden vorkommenden Signalpegel dargestellt. So weist das erste Differenzsignal SP1 z.B. einen positiven Signalpegel auf, wobei die erste Signalleitung A beispielhaft das Potential +5V einer Versorgungsspannungsquelle, und die zweite Signalleitung Â beispielhaft das Potential 0V eines Massebezuges annimmt. Entsprechend weist das zweite Differenzssignal SP2 einen invertierten, z.B. negativen Signalpegel auf, wobei die erste Signalleitung A z.B. das Potential 0V und die komplementäre Signalleitung Â z.B. das Potential +5V annimmt. Die Signalübertragung auf einer derartigen Differenzsignal-Übertragungsstrecke US erfolgt in der üblichen Weise durch hochfrequentes Umschalten zwischen den beiden Signalpegeln SP1,SP2. Hierdurch entstehen "Umschaltmuster" bzw. Impulsketten, in die Informationen eingeprägt und am anderen Ende der Differenzsignal-Übertragungsstrecke US rückgewonnen werden.

Die erste und zweite umschaltbare Sende-Empfangseinheit TC1,TC2 bei dem in der Figur dargestelltem Beispiel sind bevorzugt identisch. Jede Einheit enthält einen Empfänger R und einen Sender T. Für die Zu-/Abschaltung der Empfänger R ist jeweils ein Steuersignal RE, und für die Zu-/Abschaltung der Sender T ist jeweils ein Steuersignal TE vorhanden. Über den Ausgang RD können bei Empfangsbetrieb der jeweiligen Sende-Empfangseinheit Sendedaten gelesen werden. Über den Eingang TD können bei Sendebetrieb der jeweiligen Sende-Empfangseinheit zu sendende Daten in die Differenzsignal-Übertragungsstrecke US eingespeist werden.

Bei dem in der Figur dargestellten Beispiel weist die Differenzsignal-Übertragungsstrecke US ferner eine Schaltung LA auf. Diese besteht aus einer die erste Signalleitung A mit der komplementären Signalleitung Â verbindenden Reihenschaltung aus einem Abschlußwiderstand R5 und einem Abschlußkondensator C. Bei der Schaltung LA handelt es sich um einen sogenannten "Wechselstromabschluß", auch "AC-Abschluß" genannt. Dieser wird aktiv bei jedem Signalwechsel, d.h. bei jedem Übergang zwischen den Differenzsignalen SP1 und SP2. Wegen der auftretenden Verschiebungsströme wird der Kondensator C kurzzeitig zum Kurzschluß. Die Übertragungsstrecke US wird in diesen Moment durch den dann aktiven Widerstand R5 abgeschlossen, so daß definierte Signalströme und definierte Signalspannungspegel auf der Übertragungsstrecke auftreten.

Die erfindungsgemäße Überwachungsschaltung UW und weitere bevorzugte Ausführungen derselben sind in der unteren Hälfte der Figur dargestellt.

Die erfindungsgemäße Überwachungsschaltung UW weist am Eingang einen Brückengleichrichter B auf, der eingangsseitig mit den Signalleitungen A,Â der Differenzsignal-Übertragungsstrecke US verbunden ist. Der Brückengleichrichter B wandelt den ständigen Wechsel der Differenzsignale SP1,SP2 auf den Signalleitungen A,Â im ordnungsgemäßen Funktionszustand der Übertragungsstrecke in ein konstantes Potential an den Ausgangselektroden A1,A2 um. Im Falle eines gestörten Funktionszustandes dagegen ist mit dem Auftreten von undefinierten, schwebenden Potentialen an den Ausgangselektroden A1,A2 zu rechnen.

Am Ausgang der erfindungsgemäßen Überwachungsschaltung UW ist ein Komparator K vorhanden. Dessen binäres Ausgangssignal dient als Überwachungssignal WS und signalisiert den ordnungsgemäßen bzw. gestörten Funktionszustand der Signalleitungen A,Â der Differenzsignal-Übertragungsstrecke US.

Erfindungsgemäß sind der Brückengleichrichter B und der Komparator K über zwei dazwischen angeordnete Stromkreise Sn,Sf miteinander verbunden. Der erste Stromkreis Sn ist bei ordnungsgemäßem Funktionszustand der Signalleitungen A,Â aktiv, und legt eine von der Spannung an den Ausgangselektroden A1,A2 abgeleitete Spannung Un an die Eingangselektroden E1,E2 des Komparators K. Dieser nimmt daraufhin einen der beiden möglichen Schaltzustände an. Der Zustand des als Überwachungssignal WS dienenden Ausgangssignales des Komparators K zeigt dann den ordnungsgemäßen Funktionszustand der Signalübertragungsstrecke US an.

Der zweite Stromkreis Sf wird bei Auftreten eines gestörten Funktionszustandes der Signalleitungen A,Â aktiv. In diesem Fall liegen an den Ausgangselektroden A1,A2 des Brückengleichrichters B nur undefiniert schwebende, nicht auswertbare Potential, und es kann keine Spannung Un abgeleitet werden. Erfindungsgemäß generiert der zweite Stromkreis Sf nun unter Zuhilfenahme der Energieversorgung der Übertragungsstrecke eine Spannung Uf, welche im Vergleich zur abgeleiteten Spannung Un bei ungestörtem Funktionszustand ein umgekehrtes Vorzeichen aufweist. Diese Spannung Uf liegt anstelle der abgeleiteten Spannung Un an den Eingangselektroden E1,E2 des Komparators K und veranlaßt diesen zur Einnahme des anderen der beiden möglichen Schaltzustände. Das Ausgangssignal des Komparators K nimmt den anderen logischen Pegel an, so daß es in der Funktion als Überwachungssignal WS nun den gestörten Funktionszustand der Signalübertragungsstrecke US anzeigt.

Der Vorteil der erfindungsgemäßen Schaltung liegt zum einen darin, daß die beiden Stromkreise Sn,Sf sich abhängig vom Funktionszustand der Übertragungstrecke selbsttätig ablösen. Der zweite Stromkreis Sf liegt zwar auch im ungestörten Funktionszustand der Übertragungsstrecke an Spannung an, d.h. er ist nicht durch mechanische Schaltelemente oder dergleichen abgetrennt. Dennoch wird seine Aktivität im Hinblick auf die Ansteuerung des Komparators K durch die vorhandene Aktivität des ersten Stromkreises Sn vollständig gehemmt bzw. überdeckt. Die Aktivität des zweiten Stromkreises Sf wird erst dann dominierend, wenn die Aktivität des ersten Stromkreise Sn aufgrund undefinierter Potentiale am Ausgang des Brückengleichrichters B eingeschränkt ist oder zusammenbricht. Der Ausgang des Brückengleichrichters ist durch Ausbleiben einer definierten Spannung "offen", so daß die vom zweiten Stromkreis Sf generierte Spannung Uf überwiegt und wieder definierte Spannungsverhältnisse am Komparatoreingang erzwingt . Da diese Spannung dann aber ein umgekehrtes Vorzeichen hat, kippt der Schaltzustand des Komparators. Der geänderte Zustand der Ausgangssignales des Komparators ist das Zeichen für das Vorliegen des gestörten Funktionszustandes.

Die erfindungsgemäße Schaltung weist den weiteren Vorteil auf, daß sie auf einfache Weise und ohne Hinzunahme von gesonderten Fremdenergiequellen aufgebaut werden kann. Vielmehr wird der im ungestörten Funktionszustand der Übertragungsstrecke aktive erste Stromkreis Sn von der Spannung am Ausgang des Brückengleichrichters B gespeist, und damit aus den Signalleitungen A,Â der Übertragungsstrecke US. Wird im gestörten Zustand der erste Stromkreis Sn durch die Selbstaktivierung des zweiten Stromkreises Sf abgelöst, so generiert dieser die Spannung Uf mit umgekehrten Vorzeichen mit Hilfe der ohnehin vorhandenen Energieversorgung der Übertragungsstrecke US,TC1,TC2.

Vorteilhaft ist weiterhin, daß über den Brückengleichrichter B am Eingang der erfindungsgemäßen Schaltung die Differenzsignale SP1,SP2 in einer die Datenübertragung auf der Übertragungsstrecke US nicht beeinträchtigenden Weise abgegriffen werden können. Insbesondere ist es nicht notwendig, z.B. passive Bauelemente in den Übertragungsweg der Signalleitungen A,Â einzusetzen. Diese würden die Signalübertragung in einer unerwünschten Weise dämpfen.

Bei einer in der Figur bereits dargestellten, weiteren Ausführung der Erfindung sind zwei Spannungsschienen SS1,SS2 vorgesehen, welche die Ausgangselektroden A1,A2 des Brückengleichrichters B mit den Eingangselektroden E1,E2 des Komparators K verbinden. Aus der im ungestörten Funktionszustand der Übertragungsstrecke an den Ausgangselektroden A1,A2 des Brückengleichrichters B auftretenden Spannung wird vom ersten Stromkreis Sn eine Spannung Un abgeleitet und über eine erste bzw. zweite Spannungsschiene SS1,SS2 der nicht invertierenden bzw. invertierenden Eingangselektrode E1 bzw. E2 des Komparators K zugeführt.

Bei ordnungsgemäßen Funktionszustand der Übertragungstrecke US ist das durch die abgeleitete Spannung Un hervorgerufene Potential auf der ersten Spannungsschiene SS1 z.B. größer als das Potential auf der zweiten Spannungsschiene SS2. Am Eingang des im Beispiel der Figur dargestellten Komparators K liegt eine positive Eingangsspannung. Der Komparator K nimmt den nicht gekippten Schaltzustand ein, so daß am Signalpegel des Überwachungssignales WS der ordnungsgemäße Funktionszustand der Differenzsignal-Übertragungsstrecke US abgelesen werden kann. Die Bauelemente des ersten Stromkreises Sn sind so ausgelegt, daß eine positive, von der ersten Spannungsschiene SS1 zur zweiten Spannungsschiene SS2 gerichtete Spannung am Eingang des Komparators K anliegt, so lange der Betrag der Differenzsignale SP1, SP2 zwischen den Signalleitungen A,Â einen vorgegebenen Mindestwert überschreitet.

Würde dieser Wert dagegen bei Vorliegen eines Fehlerfalles unterschritten werden bzw. würde eine definierte Spannung am Ausgang des Brückengleichrichters vollständig ausbleiben, so erzwingen erfindungsgemäß die Bauelemente des zweiten Stromkreises Sf einen Potentialwechsel zwischen dem Brückengleichrichter B und dem Komparator K. Bei dieser Ausführung der Erfindung verschiebt der zweite Stromkreis Sf die Potentiale der Spannungsschienen derart, daß dazwischen eine Spannung Uf mit einem im Vergleich zur abgeleiteten Spannung Un umgekehrten Vorzeichen auftritt. Bei dem in der Figur dargestellten Beispiel ist das Potential auf der zweiten Spannungsschiene SS2 nun größer als das auf der ersten Spannungsschiene SS1, so daß eine negative Spannung an den Eingangselektroden E1,E2 des Komparators K anliegt. Dieser kippt in den anderen Schaltungszustand, so daß an dem veränderten Potential des Überwachungssignales WS der gestörte Funktionszustand der Übertragungsstrecke US abgelesen werden kann.

In der Figur ist schließlich eine bevorzugte Ausführung der erfindungsgemäßen Schaltung mit allen Bauelementen im einzelnen dargestellt. Dieser Aufbau für einen ersten und zweiten Stromkreis Sn,Sf der Überwachungsschaltung UW und wird nachfolgend im Detail erläutert.

Der gemäß der Erfindung bei ordnungsgemäßem Funktionszustand der Signalleitungen A,Â der Differenzsignal-Übertragungsstrecke US aktive erste Stromkreis Sn besteht im dargestellten Beispiel aus der Reihenschaltung eines ersten Widerstandes R1, einer ersten Diode D1 und eines zweiten Widerstandes R1. Die Reihenschaltung ist an den Ausgangselektroden A1,A2 des Brückengleichrichters B angeschlossen, und die Elektroden der ersten Diode D1 sind mit den Eingangselektroden E1,E2 des Komparators K verbunden. Bei dem in der Figur dargestellten Beispiel ist somit auf der Ausgangsseite des Brückengleichrichters in die Spannungsschiene SS1 der Widerstand R1 und in die Spannungsschiene SS2 der Widerstand R2 eingeschaltet. Beide Schienen sind über die Diode D1 derart miteinander verbunden, daß deren Durchlaßrichtung von der Spannungsschiene SS1 zur Spannungsschiene SS2 gerichtet ist. Der positive Eingang E1 des Komparators K ist somit über die Spannungsschiene SS1, die in Durchlaßrichtung gepolte Diode D1 und die Spannungsschiene SS2 mit dem negativen Eingang E2 verbunden.

Bei ordnungsgemäßem Funktionszustand der Signalleitungen A,Â wird auf der ersten Spannungsschiene SS1 ein gegenüber der zweiten Spannungsschiene SS2 positiveres Potential auftreten. Es ist dann der in der Figur als strichlierter Pfeil dargestellte Stromkreis Sn aktiv. Es bildet sich ein Stromfluß In von der positiven Ausgangselektrode A1 des Brückengleichrichters B über den ersten Widerstand R1, der in Durchlaßrichtung gepolten ersten Diode D1, dem zweiten Widerstand R2 bis zur negativen Ausgangselektrode A2 aus. Dieser bewirkt eine von der ersten Spannungsschiene SS1 zur zweiten Spannungsschiene SS2 gerichtete positive Spannung Un, welche in Durchlaßrichtung an der ersten Diode D1 abfällt und von dieser auf den Wert der bauelementspezifischen Durchlaßspannung begrenzt wird. Die positive Diodenspannung Un liegt über die Spannungsschienen SS1,SS2 zwischen den Eingangselektroden E1,E2 des Komparators K an und ruft ein den ordnungsgemäßen Funktionszustand der Signalleitungen A,Â kennzeichnenden Zustand des Überwachungssignales WS hervor.

Der erfindungsgemäß bei gestörtem Funktionszustand der Signalleitungen A,Â aktive zweite Stromkreis Sf besteht bei dem in der Figur dargestellten Beispiel der Überwachungsschaltung UW aus der Reihenschaltung eines dritten Widerstandes R3, einer zweiten Diode D2 und eines vierten Widerstandes R4. Der Widerstand R3 ist auf der einen Seite mit dem als niederigen Signalpegel dienenden Massebezugspotential MP und auf der anderen Seite mit der ersten Spannungsschiene SS1 verbunden. Der vierte Widerstand R4 ist im dargestellten Beispiel mit dem als hoher Signalpegel dienenden Versorgungsspannungspotential +Uv der Schaltung und auf der anderen Seite mit der zweiten Spannungsschiene SS2 verbunden. Die zwischen den Widerständen R3,R4 der Reihenschaltung angeordnete Diode D2 ist antiparallel mit den Elektroden der ersten Diode D1 und mit den Eingangselektroden E1,E2 des Komparators K verbunden.

Im gestörtem Zustand der Übertragungsstrecke, d.h. bei Vorliegen von undefiniert schwebenden Potentialen auf den Signalleitungen A,Â , fällt die abgeleitete Spannung Un an der Diode D1 des ersten Stromkreises Sn aus. Es wird nun der zweite Stromkreis Sf aktiv, indem sich ein Stromfluß If von der Quelle mit hohem Signalpegel +Uv über den Widerstand R4, durch die Diode D2, den Widerstand R3 bis zum Bezugspunkt MP mit niedrigem Signalpegel ausbildet. In diesem Fall tritt eine von der Spannungsschiene SS2 zur Spannungsschiene SS1 gerichtete Spannung Uf an der stromführenden, antiparallelen Diode D2 auf. Deren Betrag wird wiederum auf die Durchlaßspannung der Diode D2 begrenzt. Da die Spannung Uf von der invertierenden zur nichtinvertierenden Eingangselektrode des Komparator K gerichtet ist, nimmt dieser die zweite Schaltposition ein. Das Überwachungssignal WS am Ausgang hat somit ein verändertes Potential. Dies kann für das Vorliegen des gestörten Funktionszustandes der Signalleitungen A,Â der Differenzsignal-Übertragungsstrecke US ausgewertet werden kann.

Die Reihenschaltung des Widerstandes R3, der Diode D2 und des Widerstandes R4 des zweiten Stromkreises If erzwingt somit dann, wenn aufgrund einer Störung nur undefinierte Potentiale auf den Signalleitungen A,Â sind, daß am Eingang des Komparators K eine definierte Spannung mit umgekehrten Potenial anliegt. Diese Spannung zwingt den Komparator K in den umgekehrten, den Fehlerzustand im Überwachungssignal WS anzeigenden Schaltzustand. Bei dem in der Figur dargestellten Beispiel wirkt somit bei Fehlen eines definierten Potentiales am Ausgang des Brückengleichrichters B und somit bei Fehlen eines definierten Stromflusses In der Widerstand R4 als ein "Pull up" für die zweite Spannungsschiene SS2 und der Widerstand R3 als ein "Pull down" für die erste Spannungsschiene SS1. Beide Schienen werden somit auf definierte Potentiale gezogen. Bei dem dargestellten Beispiel wird somit die Spannungsschiene SS2 in Richtung auf das positive Versorgungsspannungspotential +Uv hochgezogen und die Spannungsschiene SS1 in Richtung auf das Massebezugspotential MP heruntergezogen.

Durch eine geeignete Abstimmung der Dimensionierung der Widerstände R1 bis R4 kann erreicht werden, daß die beiden Stromkreise Sn,Sf in der oben beschriebenen Weise funktionell entkoppelt sind. Es sind somit keine schaltenden Bauelemente notwendig. Der erste Stromkreis Sn mit den Elementen R1,D1,R2 ist somit bei ordnungsgemäßem Funktionszustand der Differenzsignal-Übertragungsstrecke aktiv und wird vom zweiten Stromkreis Sf mit den Elementen R4,D2,R3 bei gestörtem Funktionszustand abgelöst.

Bei dem in der Figur dargestellten Ausführungsbeispiel der erfindungsgemäßen Schaltung sollte hierzu der Widerstand R1 kleiner als der Widerstand R3, und der Widerstand R2 ebenfalls kleiner als der Widerstand R4 ausgewählt werden. Bevorzugt weist R1 annähernd den halben Widerstandswert von R3 auf, und R2 ist erheblich kleiner als R4. Die Widerstände R1 und R2 haben bevorzugt vergleichbare Werte. Vorteilhaft weist R4 einen Widerstandswert auf, welcher etwa zehn mal größer als der von R2 ist.

## Patentansprüche

1. Schaltung zur Überwachung des Funktionszustandes der Signalleitungen (A,Â) einer Übertragungsstrecke (US;TC1,TC2), auf der Differenzsignale (SP1,SP2) bevorzugt bidirektional (RD,TD,RE,TE) übertragen werden, mit
a) einem Brückengleichrichter (B), dessen Eingangselektroden an die Signalleitungen (A,Â) der Übertragungsstrecke (US) angeschlossen sind,
b) einem Komparator (K), dessen Ausgangssignal als Überwachungssignal (WS) den Funktionszustand der Signalleitungen (A,Â) anzeigt, wobei
c) zwischen dem Brückengleichrichter (B) und dem Komparator (K) angeordnet sind
c1) ein erster Stromkreis (R1,D1,R2), der bei ordnungsgemäßem Funktionszustand der Signalleitungen (A,Â) aktiv ist (Sn,In) und eine von der Spannung an den Ausgangselektroden (A1,A2) des Brückengleichrichters (B) abgeleitete Spannung (Un) an den Eingangselektroden (E1,E2) des Komparators (K) anlegt, und
c2) ein zweiter Stromkreis (R4,D2,R3), der sich bei Ausbleiben einer definierten, abgeleiteten Spannung (Un) am Ausgang des Brückengleichrichters (B) im gestörtem Funktionszustand der Signalleitungen (A,Â) aktiviert (Sf,If) und der unter Zuhilfenahme der Energieversorgung (+Uv,MP) der Übertragungsstrecke (US;TC1,TC2) eine Spannung (Uf) mit im Vergleich zu der abgeleiteten Spannung (Un) umgekehrten Vorzeichen an den Eingangselektroden (E1,E2) des Komparators (K) erzwingt.

2. Schaltung nach Anspruch 1, wobei
a) die Ausgangselektroden (A1,A2) des Brückengleichrichters (B) über je eine Spannungsschiene (SS1,SS2) mit den Eingangselektroden (E1,E2) des Komparators (K) verbunden sind,
b) der erste Stromkreis (R1,D1,R3) bei ordnungsgemäßem Funktionszustand der Signalleitungen (A,Â) die von der Spannung an den Ausgangselektroden (A1,A2) des Brückengleichrichters (B) abgeleitete Spannung (Un) zwischen die Spannungsschienen (SS1,SS2) anlegt, und
c) der zweite Stromkreis (R4,D2,R3) bei Ausbleiben einer definierten Spannung am Ausgang des Brückengleichrichters (B) im Falle des gestörten Funktionszustandes der Signalleitungen (A,Â) die Potentiale der Spannungsschienen (SS1,SS2) derart verschiebt, daß im Vergleich zur abgeleiteten Spannung (Un) eine Spannung (Uf) mit umgekehrtem Vorzeichen zwischen den Spannungsschienen (SS1,SS2) anliegt.

3. Schaltung nach Anspruch 1 oder 2, wobei
a) der erste, bei ordnungsgemäßem Funktionszustand der Signalleitungen (A,Â) aktive Stromkreis (Sn;In,Un) aus
a1) einer Reihenschaltung eines ersten Widerstandes (R1), einer ersten Diode (D1) und eines zweiten Widerstandes (R2) besteht, wobei
a2) die Reihenschaltung an den Ausgangselektroden (A1,A2) des Brückengleichrichters (B) angeschlossen ist, und die Eingangselektroden (E1,E2) des Komparators (K) an den Elektroden der ersten Diode (D1) angeschlossen sind, und
b) der zweite, bei gestörtem Funktionszustand der Signalleitungen (A,Â) aktive Stromkreis (Sf;If,Uf) aus
b1) einer Reihenschaltung eines dritten Widerstandes (R3), einer zweiten Diode (D2) und eines vierten Widerstandes (R4) besteht, wobei
b2) der dritte Widerstand (R3) mit dem anderen Anschluß mit einem niedrigen Signalpegel verbunden ist, bevorzugt einem Massebezugspotential (MP), und
der vierte Widerstand (R4) mit dem anderen Anschluß mit einem hohen Signalpegel verbunden ist, bevorzugt einem Versorgungsspannungspotential (+Uv), und
die zweite Diode (D2) antiparallel sowohl mit den Elektroden der ersten Diode (D1) als auch mit den Eingangselektroden (E1,E2) des Komparators (K) verbunden ist.
